# EUROPEAN PATENT SPECIFICATION

(11) **EP 2 329 690 B1**
(45) Date of publication and mention of the grant of the patent: **15.08.2012**
(21) Application number: 09785042.4
(22) Date of filing: 01.09.2009
(51) Int. Cl.: H05B 41/288

(54) **CONTROL OF LAMP STRIKING VOLTAGE AND RECOVERY OF ENERGY FROM RESONANT LAMP STRIKE CIRCUITS USED FOR ELECTRONIC HIGH INTENSITY DISCHARGE LAMP BALLASTING AND OTHER LAMP BALLASTS**
STEUERUNG DER LAMPENZÜNDSPANNUNG UND WIEDERGEWINNUNG VON ENERGIE AUS RESONANZLAMPEN-ZÜNDSCHALTUNGEN, DIE FÜR ELEKTRONISCHE VORSCHALTGERÄTE FÜR HOCHINTENSITÄTS-ENTLADUNGSLAMPEN UND ANDERE LAMPENVORSCHALTGERÄTE VERWENDET WERDEN
COMMANDE DE LA TENSION D'AMORÇAGE D'UNE LAMPE ET RÉCUPÉRATION DE L'ÉNERGIE PROVENANT DE CIRCUITS RÉSONANTS DE LAMPE UTILISÉS POUR LE BALLASTAGE ÉLECTRONIQUE DE LAMPES À DÉCHARGE DE HAUTE INTENSITÉ ET D'AUTRES BALLASTS DE LAMPE

(30) Priority: 29.08.2008 US 93166 P; 28.08.2009 US 549432
(43) Date of publication of application: 08.06.2011
(60) Divisional application: 12004338.5
(73) Proprietor: Greenwood Soar IP Limited, Catterall Preston Lancashire PR3 1TQ (GB)
(72) Inventor: SOAR, Stephen, Catterall Garstang PR3 1TQ (GB); GREENWOOD, Simon, Richard, Twemlow Green Cheshire CW4 8BS (GB)
(74) Representative: Smith, Peter James
(86) International application number: PCT/GB2009/002114
(87) International publication number: WO 2010/023464

(56) References cited:
- EP-A2- 0 984 670
- JP-A- 6 311 755
- US-A- 6 020 691
- US-A1- 2002 030 451

## Description

### FIELD OF THE INVENTION

The present invention relates to resonant lamp strike circuits. More particularly, the present invention relates to control of lamp striking voltage and recovery of energy from resonant lamp strike circuits.

### BACKGROUND OF THE INVENTION

In recent years Electronic High Intensity Discharge Lamp Ballasts have taken over from the traditional copper wire winding and iron core "magnetic" or reactive ballasts in combination with a high voltage pulse ignitor. Most recently these Electronic High Intensity Discharge Lamp Ballasts have used resonant high frequency ignition to break down and ionise the gas filling of the discharge tube. These resonant high frequency ignition systems have some advantages over earlier pulse ignition systems in that most lamps will break down at a lower voltage with high frequency than with discrete short pulses of high voltage. There are considerations of various standards which limit the voltage of pulse and resonant ignition systems and in some cases there are lamp manufacturer imposed minimum and maximum strike voltage limits which have to be met.

In resonant high frequency ignition systems, typically the voltage for striking the lamp is provided by a resonant L & C circuit driven by a square wave voltage provided by the ballast's output stage. One such circuit is disclosed in the inventors' earlier published patent application EP-A-0984670. Figure 1 of the present specification shows how such a circuit which may be used to provide resonant striking by means of resonating a capacitor and inductor to multiply a stimulating voltage.

A stimulating voltage 6 is provided by switching means 4 and 5 which are controlled to turn on and off in opposition and in response to gate signals provided by controller circuit 1. The stimulating voltage 6 is resultant of the alternate switching of the node of switching means 4 and 5 and inductor 7 alternately connecting the inductor 7 to a first positive DC voltage rail 2 and a second negative DC voltage rail 3. The controller circuit 1 may be designed or programmed to operate the switching means 4 and 5 at a frequency chosen to coincide with the resonant frequency of the inductor 7 and capacitor 8. Typically this resonant circuit comprising inductor 7 and the capacitor 8 is designed such that the Q factor of the circuit acts to give multiplication of the stimulating voltage 6 resulting in a lamp striking voltage 9 which may be limited in value by the Q factor of the circuit or the saturation of the magnetic core of the inductor 7. The control circuit 1 may be designed or programmed to operate the switching means 4 and 5 at various discrete frequencies within a range or to sweep the frequency between two frequencies so as to allow for manufacturing tolerances in the resonant components 7 and 8 and / or externally connected parasitic capacitances such as lamp wiring capacitance if the lamp 10 is wired some distance from the ballasting / striking circuit as shown. Once the lamp is struck, lamp arc current is maintained and conducted back to the DC voltage rails 2 and 3 via series connected capacitors 11 and 12.

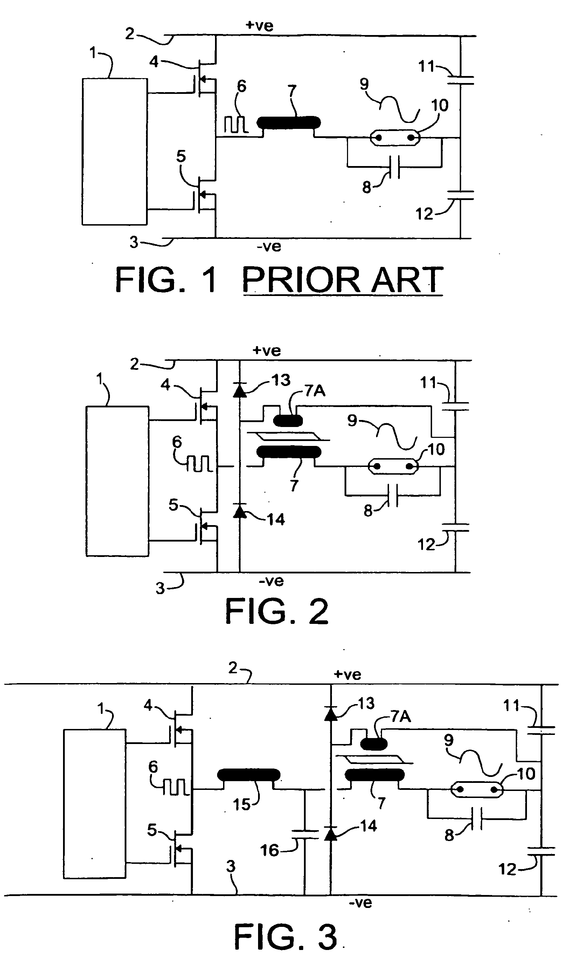

Such circuits and means described in respect of figure 1 are prone to problems controlling the strike voltage accurately so as to meet the requirements of various regulatory bodies, standards and lamp manufacturers in respect of minimum and maximum strike voltage requirements. Tolerances in the resonant L and C components 7 and 8, differences in the magnetic material of the resonant inductor 7 due to manufacturing tolerances, changes in the magnetic material over a range of operating temperatures, externally connected parasitic capacitance, tolerance on the stimulating voltage frequency, etc. may all result in changes from the designed and desired lamp striking voltage.

Published patent application US-A-2002/0030451 discloses a ballast circuit similar to that in present Figure 1. However, the resonant circuit includes a pair of series-connected inductors that may be inductively coupled to one another. The node between the inductors is connected to one voltage rail by a first diode and to the other voltage rail by a second diode. If transients in the power supply cause the voltage at the node between the inductors to exceed the voltage on one of the rails, the associated diode becomes conductive and clamps the voltage. However, the circuit is not immune to the previously described errors due to tolerances and operating conditions.

Various other resonant striking circuits have been used. Usually these comprise resonant L and C components or multiplicities of the same. Whatever combinations are used there remains the problem of gaining accurate control of the lamp striking voltage without causing severe power losses or degrading of other lamp ballast circuit performance parameters.

The present invention provides improvements over the current state of the art.

### BRIEF SUMMARY OF THE INVENTION

In one aspect, the current invention provides a circuit adapted to control resonant strike of a lamp as defined in claim 1.

In another aspect, the invention provides a method for controlling a resonant strike of a lamp as defined in claim 9.

The claimed invention prevents excess voltage from occurring in a lamp striking circuit by diverting excess energy from a resonant circuit if the voltage exceeds a desired value. In another aspect, an embodiment of the present invention allows for substantial recovery of this excess voltage such that the excess energy is not lost.

### BRIEF DESCRIPTION OF THE DRAWINGS

The accompanying drawings incorporated in and forming a part of the specification illustrate several aspects of the present invention and, together with the description, serve to explain the principles of the invention. In the drawings:

The components and the figures are not necessarily representative of any product or circuit used or not, emphasis instead being placed upon illustrating the principles of the invention. Moreover, in the figures, like reference numerals designate corresponding parts throughout the different views.

Figure 1 shows a typical prior art circuit which may be used to provide resonant striking by means of resonating a capacitor and inductor to multiply a stimulating voltage.

Figure 2 shows a first embodiment of a circuit which may be used to provide resonant striking, by means of resonating a capacitor and inductor to multiply a stimulating voltage, where the lamp striking voltage is limited by means of a secondary winding and a pair of diodes.

Figure 3 shows a similar circuit to Figure 2 with the addition of an L C low pass filter to reduce high frequency ripple current on the lamp during operation subsequent to striking of the lamp.

Figure 4 shows a similar circuit to Figure 2 with the addition of dual buck converters and L and C low pass filters to reduce high frequency ripple current on the lamp during operation subsequent to striking of the lamp.

Figure 5 shows a second embodiment of a circuit which may be used to provide resonant striking by means of resonating a capacitor and inductor to multiply a stimulating voltage, where the lamp striking voltage is limited by means of a secondary winding and a pair of diodes.

Figure 6 shows a similar circuit to Figure 5 with the addition of an L C low pass filter to reduce high frequency ripple current on the lamp during operation subsequent to striking of the lamp.

Figure 7 shows a similar circuit to Figure 5 with the addition of dual buck converters and L and C low pass filters to reduce high frequency ripple current on the lamp during operation subsequent to striking of the lamp.

Figure 8 shows a block diagram of a typical high intensity discharge lamp ballast using an output circuit similar to that in Figure 7.

Figure 9 shows an alternate embodiment of a circuit using a full bridge ballast which may be used to provide resonant striking by means of resonating a capacitor and inductor to multiply a stimulating voltage, where the lamp striking voltage is limited by means of a secondary winding and two pairs of diodes.

While the invention will be described in connection with certain preferred embodiments, there is no intent to limit it to those embodiments. On the contrary, the intent is to cover all alternatives, modifications and equivalents as included within the scope of the invention as defined by the appended claims.

### DETAILED DESCRIPTION OF THE INVENTION

In a first preferred embodiment shown in Figure 2, a circuit which may be used to provide resonant striking by means of resonating a capacitor and inductor to multiply a stimulating voltage is shown.

A stimulating voltage 6 is provided by switching means 4 and 5 which are controlled to turn on and off in opposition and in response to gate signals provided by controller circuit 1. The stimulating voltage 6 is resultant of the alternate switching of the node of switching means 4 and 5 and inductor 7 alternately connecting the inductor 7 to a first positive DC voltage rail 2 and a second negative DC voltage rail 3. The controller circuit 1 is designed or programmed to operate the switching means 4 and 5 at a frequency or several frequencies chosen to coincide with the resonant frequency of the inductor 7 and capacitor 8. In this case, a secondary winding 7A is provided which is connected in one instance to the mid node of the serially connected capacitors 11 and 12 and in the other instance to the junction of the two serially connected diodes 13 and 14. Additionally, a second pair of diodes (not shown) may be utilized in parallel with capacitors 11 and 12. The voltage in both windings of inductor 7 is substantially defined by the turns ratio of the windings. During the high frequency operation of the switching means the mid node of capacitors 11 and 12 remains substantially at the mid voltage between the +ve DC rail 2 and the -ve DC rail 3. High frequency voltage 9 intended for striking the lamp 10 is transformed by the turns ratio of the two windings on the inductor 7 so that a proportional voltage appears on the secondary winding 7A of inductor 7. The turns ratio of the inductor 7 is chosen such that at the desired peak lamp striking voltage, the peak secondary winding 7A voltage is equal to half of the DC rail voltage. Since one end of the secondary winding 7A is held at mid rail voltage at the mid node of the capacitors 11 and 12, the voltage at the opposing end of the secondary winding will forward bias either one of the diodes 13 and 14 if the peak secondary voltage exceeds the half rail voltage. By these means, excess voltage is prevented from occurring in the lamp striking circuit by diverting energy from the resonant circuit if the voltage exceeds the desired value. This energy is substantially recovered into the DC voltage rails such that the limiting of voltage does not result in increased losses.

In Figure 3, a modified circuit is shown which uses a primary low pass filter comprising inductor 15 and capacitor 16. This additional low pass filter is used to reduce the high frequency current ripple applied to the lamp during normal low frequency square wave operation of the ballast circuit. The operation of the striking voltage control circuit is as described in reference to Figure 2.

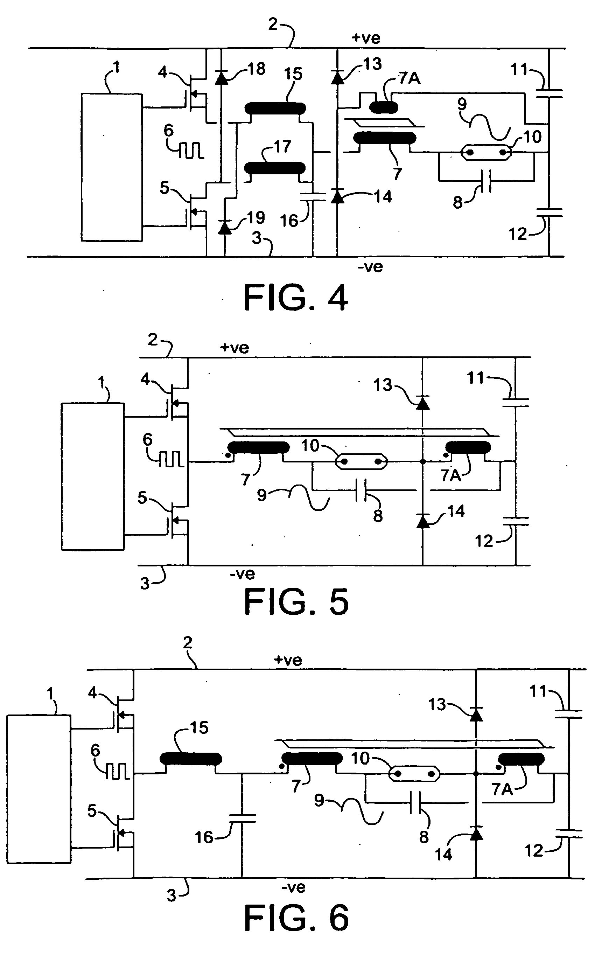

In Figure 4, a modified circuit is shown which uses two buck converters / primary low pass filters each comprising an inductor 15 or 17 and sharing a common capacitor 16. This additional low pass filter is used to reduce the high frequency current ripple applied to the lamp during normal low frequency square wave operation of the ballast circuit. The operation of the striking voltage control circuit is as described in reference to Figure 2.

In a second preferred embodiment shown in Figure 5, a circuit which may be used to provide resonant striking by means of resonating a capacitor and inductor to multiply a stimulating voltage is shown.

A stimulating voltage 6 is provided by switching means 4 and 5 which are controlled to turn off and on in opposition in response to gate signals provided by controller circuit 1. The stimulating voltage 6 is resultant of the alternate switching of the node of switching means 4 and 5 and inductor 7 alternately connecting the inductor 7 to a first positive DC voltage rail 2 and a second negative DC voltage rail 3. The controller circuit 1 is designed or programmed to operate the switching means 4 and 5 at a frequency or several frequencies chosen to coincide with the resonant frequency of the inductor 7 and capacitor 8. In this case, a secondary winding 7A is provided which is connected in one instance to the mid node of the serially connected capacitors 11 and 12 and in the other instance to the node of the two serially connected diodes 13 and 14 and lamp 10. The voltage in both windings of inductor 7 is substantially defined by the turns ratio of the windings. During the high frequency operation of the switching means, the mid node of capacitors 11 and 12 remains substantially at the mid voltage between the +ve DC rail 2 and the -ve DC rail 3. High frequency voltage 9 intended for striking the lamp 10 is transformed by the turns ratio of the two windings on the inductor 7 so that a proportional voltage appears on the secondary winding 7A of inductor 7. The turns ratio of the inductor 7 is chosen such that at the desired peak lamp striking voltage, the peak secondary winding 7A voltage is equal to half of the DC rail voltage. Since one end of the secondary winding 7A is held at mid rail voltage at the mid node of the capacitors 11 and 12, the voltage at the opposing end of the secondary winding will forward bias either one of the diodes 13 and 14 if the peak secondary voltage exceeds the half rail voltage. By these means, excess voltage is prevented from occurring in the lamp striking circuit by diverting energy from the resonant circuit if the voltage exceeds the desired value. This energy is substantially recovered into the DC voltage rails such that the limiting of voltage does not result in increased losses.

In Figure 6, a modified circuit is shown which uses a primary low pass filter comprising inductor 15 and capacitor 16. This additional low pass filter is used to reduce the high frequency current ripple applied to the lamp during normal low frequency square wave operation. The operation of the striking voltage control circuit is as described in reference to Figure 5.

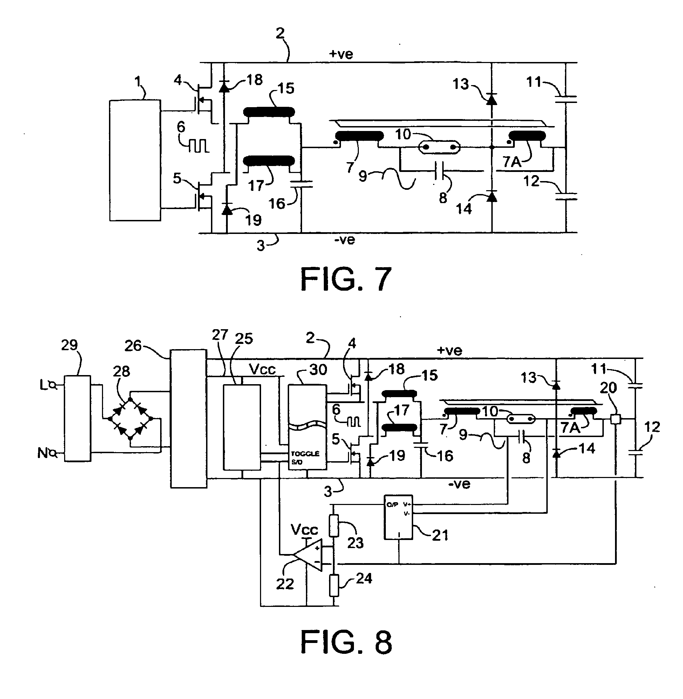

In Figure 7, a modified circuit is shown which uses two buck converters / primary low pass filters each comprising an inductor 15 or 17 and sharing a common capacitor 16. This additional low pass filter is used to reduce the high frequency current ripple applied to the lamp during normal low frequency square wave operation. The operation of the striking voltage control circuit is as described in reference to Figure 5.

In Figure 8, a partial block diagram of a typical high intensity discharge lamp ballast is shown. Mains terminals connect the mains input to an electromagnetic interference filter 29 which comprises inductive and capacitive elements such as to allow the reduction of conducted electrical interference generated within the ballast to be suppressed according to standards and regulations in force. 28 is a bridge rectifier circuit typically comprising four diodes which act upon the incoming mains AC voltage to rectify the voltage to a DC voltage. 26 is a power factor controller and power supply circuit which boosts the half sine DC voltage from the output of the rectifier circuit to a DC voltage suitable for the ballast output circuit. This DC voltage appears on DC Voltage rails 2 and 3. The capacitors 11 and 12 serve to smooth the voltage and store energy during the mains voltage zero crossing events. A third voltage rail 27 is provided which is intended to supply the low voltage electronics circuits of the ballast at typically 15V DC. 25 is a micro controller or other control circuit which oversees the operation of the ballast and controls and monitors the striking of the lamp and operation of the lamp. Typically, there are two discrete modes of operation of the lamp.

In a first discrete mode of operation, the ballast output switching means 4 and 5 are alternately switched on and off at one or several different high frequencies, typically although not exclusively in the range 40kHz to 400kHz by the action of the microcontroller 25 in response to a stored program, in order to stimulate resonance in the L C resonant circuit comprising inductor 7 and capacitor 8 and thereby generate sufficient voltage to break down or ionise the gas filling of the arc tube in a connected lamp 10.

Once the lamp has been broken down by the generated high voltage, the arc in the lamp's arc tube is maintained by the high frequency voltage applied to the inductor and capacitor network comprising inductors 15, 17 and 7 and the capacitors 16 and 8. Lamp current is returned to the voltage rails 2 and 3 via inductor winding 7A, current monitoring device 20 and capacitors 11 and 12. The impedance of the various reactive components 15, 17, 7, 16 and 8 and the operating frequency of the switching means 4 and 5 serve to control the current in the lamp during this first discrete mode of operation.

In a second discrete mode of operation, ballast output switching means 4 and 5 are alternately switched on and off at low frequency typically, although not exclusively, in the range 20Hz to 400Hz by the action of microcontroller 25 in response to a stored program. During each low frequency half cycle of operation relating to the programmed on time of each switching means, the current in the lamp circuit is monitored by current monitoring device 20 and a current proportional voltage signal is compared with a reference voltage signal at the node of resistors 23 and 24. If the current proportional voltage signal exceeds the reference voltage signal, the comparator 22 applies a shutdown signal to the switching means driver 30. This shutdown signal terminates or interrupts the on time of the active switching means, switching the switching means off, until the lamp current proportional voltage signal falls below the reference voltage value at the node of resistors 23 and 24 causing the comparator 22 to remove the shutdown signal from the input of the switching means driver 30 which causes the driver to turn on the active switching means once again. This turning on and off of the switching means in response to the lamp current signal causes the lamp current to oscillate around the value set by the reference voltage signal at the node of resistors 23 and 24. The reference voltage value at the node of resistors 23 and 24 is also responsive to the output of lamp current and voltage multiplier and integrator 21 such that once the product of lamp voltage and current exceeds the lamp power desired the output of the multiplier and integrator 21 ramps down reducing the voltage reference signal at the node of resistors 23 and 24 thus reducing the lamp current responsive voltage signal and therefore the value of lamp current at which the active switching means is switched off, until the desired lamp power is achieved and controlled in response to the multiplier and integrator 21.

In the following, opposite low frequency half cycle relating to the programmed on time of each switching means, the current in the lamp circuit is monitored by current monitoring device 20 and a current proportional voltage signal is compared with a reference voltage signal at the node of resistors 23 and 24. If the current proportional voltage signal, exceeds the reference voltage signal the comparator 22 applies a shutdown signal to the switching means driver 30. This shutdown signal terminates or interrupts the on time of the active switching means, switching the switching means off, until the lamp current proportional voltage signal falls below the reference voltage value at the node of resistors 23 and 24 causing the comparator 22 to remove the shutdown signal from the input of the switching means driver 30 which causes the driver to turn on the active switching means once again. This turning on and off of the switching means in response to the lamp current signal causes the lamp current to oscillate around the value set by the reference voltage signal at the node of resistors 23 and 24. The reference voltage value at the node of resistors 23 and 24 is also responsive to the output of lamp current and voltage multiplier and integrator 21 such that once the product of lamp voltage and current exceeds the lamp power desired the output of the multiplier and integrator 21 ramps down reducing the voltage reference signal at the node of resistors 23 and 24 thus reducing the lamp current responsive voltage signal and therefore the value of lamp current at which the active switching means is switched off, until the desired lamp power is achieved and controlled in response to the multiplier and integrator 21.

Thus, a low frequency square wave of alternating current is applied to the lamp with a small, superimposed, high frequency ripple current which is limited and bypassed by the various inductors and capacitors in the connected ballast circuit.

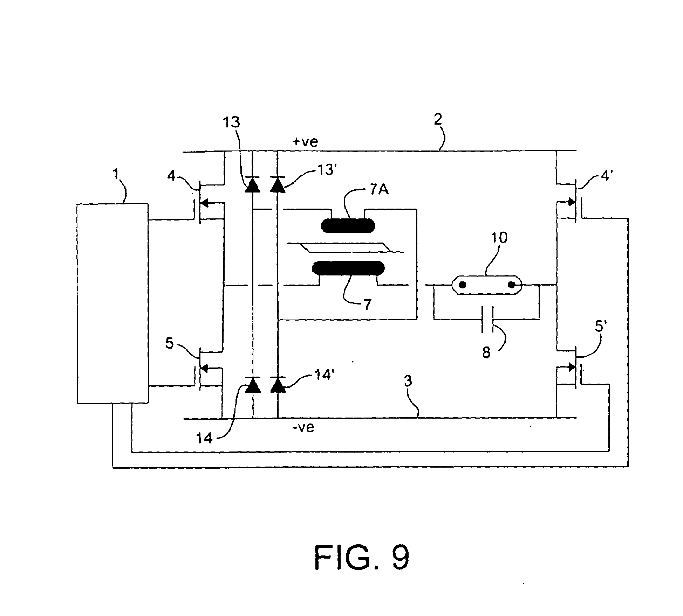

Other ballasting circuits are possible using, for instance a full bridge ballast output circuit shown in Figure 9 with 4 switching elements, e.g. transistors 4, 5, 4' and 5' where the operation of 1 or 2 or more than 2 switching means is under the control of a control means. As may be seen in this Figure 9, a second pair of diodes 13' and 14' are coupled to the opposite end of secondary winding 7A. In this embodiment, no capacitors (similar to capacitors 11, 12 in Figure 2) are used to return the lamp current to the rails 2, 3. As such, there is no capacitor mid-point to which to return a second winding 7A. In this absence the second pair of diodes 13' and 14' are utilized.

Other ballasting means are possible where the lamp is operated at high frequency continuously after ionisation of the gas filling of the arc tube and no low frequency square wave mode of operation follows.

## Claims

1. A circuit adapted to control resonant strike of a lamp (10) comprising:
a first positive voltage rail (2) and a second negative voltage rail (3);
means for providing resonant striking, the means for providing resonant striking including a capacitor (8), an inductor (7), and means for resonating the capacitor (8) and the inductor (7) to multiply a stimulating voltage; and
means for limiting a striking voltage of a lamp (10) connected to the circuit including a secondary winding (7A) and a pair of diodes comprising a first diode (13) and a second diode (14);
wherein the means for resonating the capacitor (8) and the inductor (7) further comprises:
a first switch (4) connected between the first positive voltage rail (2) and a stimulating voltage node; and
a second switch (5) connected between the second negative voltage rail (3) and the stimulating voltage node;
wherein the inductor (7) is coupled to the stimulating voltage node and to the capacitor (8), the capacitor (8) is configured in parallel with a first and a second terminals of the lamp (10), and
wherein the means for limiting the striking voltage of the lamp comprises:
the first diode (13) and the second diode (14) being connected in series between the First positive voltage rail (2) and the second negative voltage rail (9) ;
a first node being defined between the first and second diodes (13,14);
wherein a voltage on the secondary winding (7A) is proportional to a voltage on the inductor (7);
the secondary winding (7A) further comprising a first end and a second end;
wherein the second end of the secondary winding (7A) is coupled to the first node between the first and second diodes (13,14); and
**characterized in that** the first end of the secondary winding (7A) is coupled to a second node held at a reference voltage.

2. The circuit of claim 1, wherein the second lamp terminal is coupled to the first node.

3. The circuit of claim 1 or claim 2, wherein the means for resonating the capacitor (8) and the inductor (7) further comprises a first low pass filter (15,16) coupled between the first switch (4) and the stimulating voltage node and a second low pass filter (17,16) coupled between the second switch (5) and the stimulating voltage node.

4. The circuit of claim 1 or claim 2, wherein the means for resonating the capacitor (8) and the inductor (7) further comprises a primary low pass filter (15,16) coupled between the stimulating voltage node and the inductor (7).

5. The circuit of any preceding claim, wherein the reference voltage is substantially at a mid voltage between the voltage of the first positive voltage rail (2) and the voltage of the second negative voltage rail (3).

6. The circuit of claim 5, wherein a voltage on the secondary winding (7A) will forward bias one of the first and second diodes (13,14) if the voltage on the secondary winding (7A) exceeds half of the difference between the voltage of the first positive voltage rail (2) and the voltage of the second negative voltage rail (9) .

7. The circuit of any preceding claim, wherein the means for limiting the striking voltage of the lamp further comprises a pair of capacitors (11,12) coupled in series between the
voltage rails (2,3) and defining the second node therebetween.

8. The circuit of any preceding claim,
wherein the turns ratio of the inductor (7) and the secondary winding (7A) is such that at a desired peak striking voltage of the lamp (10), a peak secondary winding voltage is equal to half of the difference between the voltage of the first positive voltage rail (2) and the voltageof the second negative voltage rail (9) .

9. A method for controlling a resonant strike of a lamp (10) comprising:
resonating a capacitor (8) and an inductor (7) to multiply a stimulating voltage; and
limiting the striking voltage of a lamp (10) connected to the circuit by the use of a secondary winding (7A) and a pair of diodes comprising a first diode (13) and a second diode (14);
wherein the step of resonating the capacitor (8) and the inductor (7) further comprises:
alternately operating a first switch (4) to connect a first positive voltage rail (2) to a stimulating voltage node and operating a second switch (5) to connect a second negative voltage rail (3) to the stimulating voltage node;
the inductor (7) being coupled to the stimulating voltage node and to the
capacitor (8), the capacitor (8) being configured in parallel with first and second terminals of the lamp (10) ;
wherein a voltage on the secondary winding (7A) is proportional to a voltage on the inductor (7), the secondary winding (7A) further comprising a first end and a second end; and
wherein the step of limiting the lamp striking voltage comprises:
connecting the first diode (13) and the second diode (14) in series between the first positive voltage rail (2) and the second negative voltage rail (3) to define a first node between the first and second diodes (13,14);
coupling the second end of the secondary winding (7A) to the first node between the first and second diodes (13,14); the method **characterised by**
coupling the first end of the secondary winding (7A) to a second node held at a reference voltage.

10. The method of claim 9, wherein the step of limiting the lamp striking voltage comprises further comprises selecting the turns ratio of the inductor (7) and the secondary winding (7A) such that at a desired peak striking voltage of the lamp (10), a peak secondary winding voltage is equal to half of the difference between the first positive voltage rail (2) and the second negative voltage rail (3).

11. The method of claim 10, wherein the step of limiting the striking voltage of the lamp (10) comprises further comprises diverting a voltage in the secondary winding (7A) that exceeds half of the difference between the rail voltages via one of the pair of diodes (13,14) back into the first positive voltage rail (2) and the second negative voltage rail (3).

## Patentansprüche

1. Schaltung, die eingerichtet ist, um eine Resonanzzündung einer Lampe (10) zu steuern, umfassend:
eine erste positive Spannungsschiene (2) und eine zweite negative Spannungsschiene (3);
eine Einrichtung zur Bereitstellung der Resonanzzündung, wobei die Einrichtung zur Bereitstellung einer Resonanzzündung eine Kapazität (8), eine Induktivität (7) und eine Einrichtung zur Resonanzbildung bei der Kapazität (8) und der Induktivität (7) zur Vervielfachung einer Erregungsspannung umfasst; und
eine Einrichtung zur Begrenzung einer Zündspannung einer Lampe (10), die mit der Schaltung verbunden ist, und die eine Sekundärwindung (7A) und ein Paar von Dioden umfasst, das eine erste Diode (13) und eine zweite Diode (14) umfasst;
wobei die Einrichtung zur Resonanzbildung bei der Kapazität (8) und der Induktivität (7) weiterhin umfasst:
einen ersten Schalter (4), der zwischen die erste positive Spannungsschiene (2) und einen Erregungsspannungsknoten geschaltet ist; und
einen zweiten Schalter (5), der zwischen die zweite negative Spannungsschiene (3) und den Erregungsspannungsknoten geschaltet ist;
wobei die Induktivität (7) an den Erregungsspannungsknoten und an die Kapazität (8) gekoppelt ist, die Kapazität (8) parallel mit einem ersten und einem zweiten Anschluss der Lampe (10) konfiguriert ist; und
wobei die Einrichtung zur Begrenzung der Zündspannung der Lampe umfasst:
die erste Diode (13) und die zweite Diode (14), die in Reihe zwischen die erste positive Spannungsschiene (2) und die zweite negative Spannungsschiene (3) geschaltet sind;
einen ersten Knoten, der zwischen der ersten und zweiten Diode (13, 14) definiert ist;
wobei eine Spannung auf der Sekundärwindung (7A) proportional zu einer Spannung auf der Induktivität (7) ist;
wobei die zweite Sekundärwindung (7A) weiterhin ein erstes Ende und ein zweites Ende umfasst;
wobei das zweite Ende der Sekundärwindung (7A) an den ersten Knoten zwischen der ersten und zweiten Diode (13, 14) gekoppelt ist; und
**dadurch gekennzeichnet, dass** das erste Ende der Sekundärwindung (7A) an einen zweiten Knoten gekoppelt ist, der bei einer Bezugsspannung gehalten wird.

2. Schaltung gemäß Anspruch 1, wobei der zweite Lampenanschluss an den ersten Knoten gekoppelt ist.

3. Schaltung gemäß Anspruch 1 oder Anspruch 2, wobei die Einrichtung zur Resonanzbildung bei der Kapazität (8) und der Induktivität (7) weiterhin ein erstes Tiefpassfilter (15, 16), das zwischen den ersten Schalter (4) und den Erregungsspannungsknoten gekoppelt ist, und ein zweites Tiefpassfilter (17, 16) umfasst, das zwischen den zweiten Schalter (5) und den Erregungsspannungsknoten gekoppelt ist.

4. Schaltung gemäß Anspruch 1 oder Anspruch 2, wobei die Einrichtung zur Resonanzbildung bei der Kapazität (8) und der Induktivität (7) weiterhin ein primäres Tiefpassfilter (15, 15) umfasst, das zwischen den Erregungsspannungsknoten und die Induktivität (7) gekoppelt ist.

5. Schaltung gemäß zumindest einem der vorangegangenen Ansprüche, wobei die Bezugsspannung sich im Wesentlichen bei einer Mittelspannung zwischen der Spannung der ersten positiven Spannungsschiene (2) und der Spannung der zweiten negativen Spannungsschiene (3) befindet.

6. Schaltung gemäß Anspruch 5, wobei eine Spannung auf der Sekundärwindung (7A) eine der ersten und zweiten Diode (13, 14) vorspannt, falls die Spannung auf der Sekundärwindung (7A) eine Hälfte der Differenz zwischen der Spannung der ersten positiven Spannungsschiene (2) und der Spannung der zweiten negativen Spannungsschiene (3) überschreitet.

7. Schaltung gemäß zumindest einem der vorangegangenen Ansprüche, wobei die Einrichtung zur Begrenzung der Zündspannung der Lampe weiterhin ein Paar von Kapazitäten (11, 12) umfasst, die in Reihe zwischen den Spannungsschienen (2, 3) gekoppelt sind und den zweiten Knoten zwischen sich definieren.

8. Schaltung gemäß zumindest einem der vorangegangenen Ansprüche, wobei das Windungsverhältnis der Induktivität (7) und der Sekundärwindung (7A) dergestalt ist, dass bei einer gewünschten Spitzenzündspannung der Lampe (10) eine Sekundärwindungsspitzenspannung gleich einer Hälfte der Differenz zwischen der Spannung der ersten positiven Spannungsschiene (2) und der Spannung der zweiten negativen Spannungsschiene (3) ist.

9. Verfahren zum Steuern einer Resonanzzündung einer Lampe (10), umfassend:
Resonanzbilden bei einer Kapazität (8) und einer Induktivität (7), um eine Erregungsspannung zu vervielfachen; und
Begrenzen der Zündspannung einer Lampe (10), die mit der Schaltung verbunden ist, durch die Verwendung einer Sekundärwindung (7A) und eines Paars von Dioden, das eine erste Diode (13) und eine zweite Diode (14) umfasst;
wobei der Schritt des Resonanzbildens bei der Kapazität (8) und der Induktivität (7) weiterhin umfasst:
alternierendes Betätigen eines ersten Schalters (4), um eine erste positive Spannungsschiene (2) mit einem Erregungsspannungsknoten zu verbinden, und Betätigen eines zweiten Schalters (5), um eine zweite negative Spannungsschiene (3) mit dem Erregungsspannungsknoten zu verbinden;
Ankoppeln der Induktivität (7) an den Erregungsspannungsknoten und an die Kapazität (8), wobei die Kapazität (8) parallel zu einem ersten und einem zweiten Anschluss der Lampe (10) konfiguriert ist;
wobei eine Spannung auf der Sekundärwindung (7A) proportional zu einer Spannung auf der Induktivität (7) ist, wobei die Sekundärwindung (7A) weiterhin ein erstes Ende und ein zweites Ende umfasst; und
wobei der Schritt des Begrenzens der Lampenzündspannung umfasst:
Verbinden der ersten Diode (13) und der zweiten Diode (14) in Reihe zwischen der ersten positiven Spannungsschiene (2) und der zweiten negativen Spannungsschiene (3), um einen ersten Knoten zwischen der ersten und zweiten Diode (13, 14) zu definieren;
Koppeln des zweiten Endes der Sekundärwindung (7A) an den ersten Knoten zwischen der ersten und zweiten Diode (13, 14); wobei das Verfahren **gekennzeichnet ist durch**
Koppeln des ersten Endes der Sekundärwindung (7A) an einen zweiten Knoten, der bei einer Bezugsspannung gehalten wird.

10. Verfahren gemäß Anspruch 9, wobei der Schritt des Begrenzens der Lampenzündspannung weiterhin ein Auswählen des Windungsverhältnisses der Induktivität (7) und der Sekundärwindung (7A) derart umfasst, dass bei einer gewünschten Spitzenzündspannung der Lampe (10) eine Sekundärwindungsspitzenspannung gleich einer Hälfte der Differenz zwischen der ersten positiven Spannungsschiene (2) und der zweiten negativen Spannungsschiene (3) ist.

11. Verfahren gemäß Anspruch 10, wobei der Schritt des Begrenzens der Zündspannung der Lampe (10) weiterhin umfasst: Umlenken einer Spannung in der Sekundärwindung (7A), die eine Hälfte der Differenz zwischen den Schienenspannungen überschreitet, über eine des Paars von Dioden (13, 14) zurück in die erste positive Spannungsschiene (2) und die zweite negative Spannungsschiene (3).

## Revendications

1. Circuit conçu pour commander l'amorçage résonnant d'une lampe (10), comportant :
un premier rail (2) de tension positive et un second rail (3) de tension négative ;
un moyen pour réaliser un amorçage résonnant, le moyen pour réaliser un amorçage résonnant comprenant un condensateur (8), une inductance (7) et un moyen pour faire entrer en résonance le condensateur (8) et l'inductance (7) afin de multiplier une tension de stimulation ; et
un moyen pour limiter une tension d'amorçage d'une lampe (10) connectée au circuit comprenant un enroulement secondaire (7A) et une paire de diodes composée d'une première diode (13) et d'une seconde diode (14) ;
le moyen pour faire entrer en résonance le condensateur (8) et l'inductance (7) comprenant en outre :
un premier commutateur (4) monté entre le premier rail (2) de tension positive et un noeud de tension de stimulation ; et
un second commutateur (5) monté entre le second rail (3) de tension négative et le noeud de tension de stimulation ;
l'inductance (7) étant couplée au noeud de tension de stimulation et au condensateur (8), le condensateur (8) étant monté en parallèle avec une première et une seconde bornes de la lampe (10) ; et
le moyen pour limiter la tension d'amorçage de la lampe comprenant :
la première diode (13) et la seconde diode (14) montées en série entre le premier rail (2) de tension positive et le second rail (3) de tension négative ;
un premier noeud étant défini entre les première et seconde diodes (13, 14);
une tension dans l'enroulement secondaire (7A) étant proportionnelle à une tension dans l'inductance (7) ;
l'enroulement secondaire (7A) comprenant en outre une première extrémité et une seconde extrémité ;
la seconde extrémité de l'enroulement secondaire (7A) étant couplée au premier noeud entre les première et seconde diodes (13, 14) ; et
**caractérisé en ce que** la première extrémité de l'enroulement secondaire (7A) est couplée à un second noeud maintenu à une tension de référence.

2. Circuit selon la revendication 1, dans lequel la seconde borne de la lampe est couplée au premier noeud.

3. Circuit selon la revendication 1 ou la revendication 2, dans lequel le moyen pour mettre en résonance le condensateur (8) et l'inductance (7) comprend en outre un premier filtre passe-bas (15, 16) monté entre le premier commutateur (4) et le noeud de tension de stimulation et un second filtre passe-bas (17, 16) monté entre le second commutateur (5) et le noeud de tension de stimulation.

4. Circuit selon la revendication 1 ou la revendication 2, dans lequel le moyen pour mettre en résonance le condensateur (8) et l'inductance (7) comprend en outre un filtre passe-bas primaire (15, 16) monté entre le noeud de tension de stimulation et l'inductance (7).

5. Circuit selon l'une quelconque des revendications précédentes, dans lequel la tension de référence est sensiblement une tension intermédiaire entre la tension du premier rail (2) de tension positive et la tension du second rail (3) de tension négative.

6. Circuit selon la revendication 5, dans lequel une tension dans l'enroulement secondaire (7A) polarisera dans le sens direct l'une des première et seconde diodes (13, 14) si la tension dans l'enroulement secondaire (7A) dépasse la moitié de la différence entre la tension du premier rail (2) de tension positive et la tension du second rail (3) de tension négative.

7. Circuit selon l'une quelconque des revendications précédentes, dans lequel le moyen pour limiter la tension d'amorçage de la lampe comprend en outre une paire de condensateurs (11, 12) montés en série entre les rails de tension (2, 3) et définissant entre eux le second noeud.

8. Circuit selon l'une quelconque des revendications précédentes, dans lequel le rapport de transformation de l'inductance (7) et de l'enroulement secondaire (7A) est tel qu'à une tension de pointe voulue d'amorçage de la lampe (10), une tension de pointe dans l'enroulement secondaire est égale à la moitié de la différence entre la tension du premier rail (2) de tension positive et la tension du second rail (3) de tension négative.

9. Procédé pour commander un amorçage résonnant d'une lampe (10), comportant des étapes consistant à _{:}
faire entrer en résonance un condensateur (8) et une inductance (7) afin de multiplier une tension de stimulation ; et
limiter la tension d'amorçage d'une lampe (10) connectée au circuit à l'aide d'un enroulement secondaire (7A) et d'une paire de diodes composée d'une première diode (13) et d'une seconde diode (14).
l'étape qui consiste à faire entrer en résonance le condensateur (8) et l'inductance (7) comprenant en outre :
en alternance, l'actionnement d'un premier commutateur (4) afin de connecter un premier rail (2) de tension positive à un noeud de tension de stimulation et l'actionnement d'un second commutateur (5) afin de connecter un second rail (3) de tension négative au noeud de tension de stimulation ;
l'inductance (7) étant couplée au noeud de tension de stimulation et au condensateur (8), le condensateur (8) étant monté en parallèle avec une première et une seconde bornes de la lampe (10) ;
une tension dans l'enroulement secondaire (7A) étant proportionnelle à une tension dans l'inductance (7), l'enroulement secondaire (7A) comprenant une première extrémité et une seconde extrémité ; et
l'étape de limitation de la tension d'amorçage de lampe comprenant :
le montage de la première diode (13) et de la seconde diode (14) en série entre le premier rail (2) de tension positive et le second rail (3) de tension positive afin de définir un premier noeud entre les première et seconde diodes (13, 14) ;
le couplage de la seconde extrémité de l'enroulement secondaire (7A) au premier noeud entre les première et seconde diodes (13, 14) ; le procédé étant **caractérisé par**
le couplage de la première extrémité de l'enroulement secondaire (7A) au second noeud maintenu à une tension de référence

10. Procédé selon la revendication 9, dans lequel l'étape de limitation de la tension d'amorçage de lampe comprend en outre la sélection du rapport de transformation de l'inductance (7) et de l'enroulement secondaire (7A) de façon qu'à une tension de pointe voulue d'amorçage de la lampe (10) une tension de pointe dans l'enroulement secondaire soit égale à la moitié de la différence entre la tension du premier rail (2) de tension positive et la tension du second rail (3) de tension négative.

11. Procédé selon la revendication 10, dans lequel l'étape de limitation de la tension d'amorçage de la lampe (10) comprend en outre le détournement, dans l'enroulement secondaire (7A), d'une tension qui dépasse la moitié de la différence entre les tensions des rails, via l'une des diodes de la paire de diodes (13, 14) afin de la faire revenir dans le premier rail (2) de tension positive et le second rail (3) de tension négative.
